(19) Europäisches Patentamt
European Patent Office
Office européen des brevets

(11) **EP 0 707 369 B1**

(12) **EUROPÄISCHE PATENTSCHRIFT**

(45) Veröffentlichungstag und Bekanntmachung des Hinweises auf die Patenterteilung:
**25.11.1998 Patentblatt 1998/48**

(51) Int Cl.$^6$: **H02J 3/18**

(21) Anmeldenummer: **95810612.2**

(22) Anmeldetag: **03.10.1995**

(54) **Verfahren zur Stabilisierung eines Stromnetzes gegen Blindlastschwankungen und Blindleistungskompensationseinrichtung**

System for stabilizing a power line against reactive charge fluctuations and device for reactive power compensation

Système pour stabiliser un réseau électrique contre les fluctuations d'une charge réactive et dispositif de compensation de puissance réactive

(84) Benannte Vertragsstaaten:
**AT DE FR IT**

(30) Priorität: **12.10.1994 DE 4436353**

(43) Veröffentlichungstag der Anmeldung:
**17.04.1996 Patentblatt 1996/16**

(73) Patentinhaber: **ASEA BROWN BOVERI AG**
**5400 Baden (CH)**

(72) Erfinder: **Tambe, Shripad**
**CH-5400 Baden (CH)**

(56) Entgegenhaltungen:
**EP-A- 0 192 568    EP-A- 0 498 239**
**EP-A- 0 639 880    US-A- 5 155 740**

- **FIFTH EUROPEAN CONFERENCE ON POWER ELECTRONICS AND APPLICATIONS, Bd. 8, 13. - 16.September 1993 BRIGHTON CONFERENCE CENTER, Seiten 7-12, XP 000470808 WELSH ET AL 'transient ac/dc simulator and field tests of the closed loop control of the pelham svcs'**

**Beschreibung**

TECHNISCHES GEBIET

Bei der Erfindung wird ausgegangen von einem Verfahren zur Stabilisierung einer Stromversorgungseinrichtung oder eines Stromnetzes gegen Blindlastschwankungen mindestens einer elektrischen Last mit variabler Blindlast nach dem Oberbegriff der Patentansprüche 1 und 5 und von einer Blindleistungskompensationseinrichtung nach dem Oberbegriff der Patentansprüche 6 und 9.

STAND DER TECHNIK

Mit den Oberbegriffen nimmt die Erfindung auf einen Stand der Technik Bezug, wie er aus der US-A-5,155,740 bekannt ist. Dort ist eine Flacker-Kompensationseinrichtung für Gleichstromlichtbogenöfen angegeben, bei der eine Blindleistungsregelung nur in Abhängigkeit von der detektierten Blindleistung des Lichtbogenofens erfolgt.

Bei dieser Kompensation werden Ströme in Filterzweigen und Hilfseinrichtungen nicht berücksichtigt. Bei kleinen Elektrodenströmen kann die Blindleistung des Ofens zu klein werden. Mit fest eingebauten Kondensatorbänken führt dies zu einer Überkompensation, was häufig von Netzbetreibern nicht akzeptiert wird.

Aus der EP-A1-0 498 239 ist es bekannt, einen Lichtbogenofen mit Gleichstromanspeisung mit 2 Regelkreisen zu regeln. Ein Stromregler sorgt für konstanten Strom, entsprechend einem vorgegebenen Stromsollwert. Ein Elektrodenregelkreis beeinflußt die Position der Elektrode und somit die Lichtbogenlänge. Bei einer Verlängerung des Lichtbogens muß der Stromregler die Spannung erhöhen bzw. den Gleichrichter so ansteuern, daß der Strom konstant bleibt. Dies geht jedoch nur, solange Spannungsreserve vorhanden ist. Die Regelung der Elektrode erfolgt mittels eines adaptierbaren Gleichspannungsreglers. Als Gleichspannungsistwert dient die Lichtbogenspannung, die über ein Dämpfungsglied einem Vergleicher bzw. Summierer zugeführt ist. Der Gleichspannungssollwert muß jeweils unter Berücksichtigung der Transformator-Spannungsstufe und des Elektrodenstromes für jeden Arbeitspunkt berechnet werden. Er wird zunächst der Transformatorstufe des Stromrichtertransformators, und damit dem möglichen Spannungshub des Stromrichters entsprechend, mittels eines Begrenzers so begrenzt, daß der Stromrichter stationär maximal knapp unterhalb der Gleichrichtergrenzlage betrieben wird. Der Sollwert wird geglättet dem Summierer zugeführt, um bei Spannungssollwertsprüngen kein Überschwingen des Istwertes zu bekommen, was ein Abreissen des Lichtbogens bewirken könnte. Über eine Kompensation von Blindleistungsschwankungen ist dort nichts ausgeführt.

DARSTELLUNG DER ERFINDUNG

Die Erfindung, wie sie in den Patentansprüchen 1, 5, 6 und 9 definiert ist, löst die Aufgabe, Verfahren und Blindleistungskompensationseinrichtungen zur Stabilisierung einer Stromversorgungseinrichtung oder eines Stromnetzes gegen Blindlastschwankungen mindestens einer elektrischen Last mit variabler Blindlast der eingangs genannten Art derart weiterzuentwickeln, daß Blindlastschwankungen mit weniger Aufwand kompensiert werden können.

Ein Vorteil der Erfindung besteht darin, daß die Gleichrichter zur Speisung der Anlage nur für einen Teil der Blindlast ausgelegt werden müssen. Zur Blindleistungskompensation wird keine besondere Kompensationsreaktanz benötigt. Die in Reihe mit der Last vorhandenen Drosselspulen bzw. Reaktanzen werden anstelle besonderer Kompensationsreaktanzen verwendet, so daß Kosten reduziert werden können und die Gesamtanlage billiger wird.

Gemäß einer vorteilhaften Ausgestaltung der Erfindung ist zur Blindleistungskompensation keine zusätzliche Hardware bezüglich unkompensierten Anlagen erforderlich. Durch einen Austausch eines Rechnerprogramms kann eine befriedigende Blindleistungsregelung bei vorhandenen Anlagen nachträglich erreicht werden.

KURZE BESCHREIBUNG DER ZEICHNUNGEN

Die Erfindung wird nachstehend anhand von Ausführungsbeispielen erläutert. Die einzige Figur zeigt einen Gleichstrom-Lichtbogenofen mit einem Stromregelkreis und einem Blindleistungsregelkreis.

WEGE ZUR AUSFÜHRUNG DER ERFINDUNG

Der Einfachheit halber werden nachstehend Signale und ihnen zugeordnete Werte bzw. Größen gleich bezeichnet.

Die einzige Figur zeigt einen Gleichstromlichtbogenofen bzw. Lichtbogenofen (8) mit einer Elektrode bzw. Kathode (7), welche über 2 Reaktoren bzw. Drosselspulen (6, 6'), die in Parallelzweigen mit je einem Gleichrichter (5, 5'), je einem Ofentransformator (2, 2') mit mehreren Schaltstufen und je einem Stromwandler (3, 3') in Reihe geschaltet sind. Die Stromwandler (3, 3') sind über einen Schalter (1) an ein Wechselstromnetz (N) mit einer Wechselspannung von 33 kV angeschlossen. Eine im Bodenbereich des Lichtbogenofens (8) angeordnete 2. Elektrode bzw. Anode (12) ist mit dem Pluspol des Gleichrichters (5) verbunden (nicht dargestellt). Zwischen dem unteren Ende der Kathode (7) und einem nicht dargestellten zu schmelzenden Gut bzw. Schrott sowie mit der Oberfläche einer Schmelze bzw. eines Schmelzbades (11) brennt ein Lichtbogen (10).

Mittels der Stromwandler (3, 3') in den Wechselstromzuleitungen zu den Gleichrichtern (5, 5') werden

Teilstromistwertsignale ($i_{x1}$, $i_{x2}$) detektiert und nichtnegierenden Eingängen eines 3. Summierers (4) zugeführt, welcher die Beträge seiner Eingangsgrößen addiert und ausgangsseitig ein Stromistwertsignal ($i_x$) mit $i_x = |i_{x1}| + |i_{x2}|$ an einen negierenden Eingang eines 2. Summierers (15) sowie an einen Funktionsgeber (19) für ein Blindleistungsistwertsignal ($Q_x$) liefert. Einem nichtnegierenden Eingang dieses 2. Summierers (15) sowie einem Funktionsgeber (25) für die Berechnung eines modifizierten, begrenzten Stromsollwertsignals (S25) sind z. B. von einem nicht dargestellten Potentiometer ein vorgebbares Stromsollwertsignal ($i_w$) zugeführt. Einem weiteren negierenden Eingang des 2. Summierers (15) ist ein Stabilisierungszündwinkelsignal ($\alpha_{St}$) vom Ausgang eines Blindleistungsreglers (22) zugeführt, das im 2. Summierer (15) mit einem vorgebbaren Faktor (K1) multipliziert wird mit: $0 \leq K1 \leq 0,4$.

Ausgangsseitig ist der Summierer (15) mit einem Stromregler (16) mit Proportional-Integral-Charakteristik verbunden, welcher ausgangsseitig mit einem nichtnegierenden Eingang eines 1. Summierers (17) in Wirkverbindung steht. Einem negierenden Eingang dieses 1. Summierers (17) ist über einen an das Wechselstromnetz (N) angeschlossenen Transformator (13) und einen Wechselspannungswandler (14) ein gleichgerichtetes Netzspannungssignal ($U_{xN}$) proportional zur Amplitude der Spannung des Wechselstromnetzes (N) zugeführt, das im 1. Summierer (17) mit einem vorgebbaren Faktor (K2) mit: $0 \leq K2 \leq 0,5$ multipliziert wird. Einem weiteren negierenden Eingang des 1. Summierers (17) ist das Stabilisierungszündwinkelsignal ($\alpha_{St}$) zugeführt, das im 1. Summierer (17) mit einem vorgebbaren Faktor (K3) mit: $0 \leq K3 \leq 0,4$ multipliziert wird. Der 1. Summierer (17) liefert ausgangsseitig ein Gleichrichter-Stellgrößensignal ($\alpha_x$), entsprechend einem Zündwinkel, an einen Zündimpulswandler (18), welcher ausgangsseitig die Gleichrichter (5, 5') steuert.

Ein eingangsseitig mit der Stromleitung der Kathode (7) elektrisch verbundener Gleichspannungswandler (21) erfaßt eine Gleichspannung bzw. Lichtbogenspannung ($U_x$) des Lichtbogenofens (8). Ausgangsseitig steht er mit den Funktionsgebern (19) und (20) in Wirkverbindung. Dem Funktionsgeber (19) ist ferner eine vorgebbare oder von einer übergeordneten Steuerung (nicht dargestellt) gelieferte Gleichspannungskonstante ($U_0$), entsprechend einer gleichgerichteten Netzspannung ($U_{xN}$) ohne Last am Wechselstromnetz (N), zugeführt.

Der Funktionsgeber (19) liefert ausgangsseitig, in Abhängigkeit von seinen Eingangssignalen, ein dem Blindleistungsistwert ($Q_x$) proportionales Signal gemäß:

$$Q_x = U_0 \cdot i_x \cdot [1 - (U_x/U_0)^2]^{0,5},$$

das einem negierenden Eingang des Blindleistungsreglers (22) zugeführt ist.

Der Funktionsgeber (25) liefert das Ausgangssignal (S25) an den Funktionsgeber (20), das proportional zu cos ($\alpha_w$) ist, wobei ($\alpha_W$) einen Zündwinkelsollwert bezeichnet. Für ein Stromsollwertsignal $i_w = 0$ bis $i_w = i_{max}/2$ ist cos ($\alpha_w$) = cos ($\alpha_{min}$), wobei ($\alpha_{min}$) ein vorgebbarer minimaler Zündwinkel ist. Für ein Stromsollwertsignal $i_w \geq i_{max}$ ist cos ($\alpha_w$) = cos ($\alpha_{max}$), wobei ($i_{max}$) ein maximal zulässiger Stromwert für den Lichtbogenofen (8) und ($\alpha_{max}$) ein vorgebbarer maximaler Zündwinkel ist. Für $0 < i_w < i_{max}$ ist cos ($\alpha_w$) = $m \cdot i_w$ + cos ($\alpha_{min}$), wobei m = [cos ($\alpha_{max}$) - cos ($\alpha_{min}$)]/($0,5 \cdot i_{max}$) ist.

Der Funktionsgeber (20) liefert ausgangsseitig, in Abhängigkeit von seinen Eingangssignalen, ein dem Blindleistungssollwert ($Q_w$) proportionales Signal gemäß:

$$Q_w = U_0 \cdot i_w \cdot [1 - (\cos (\alpha_w))^2]^{0,5},$$

das einem nichtnegierenden Eingang des Blindleistungsreglers (22) zugeführt ist.

Ausgangsseitig ist der Blindleistungsregler (22) über einen Zündimpulswandler (23) mit den Steuereingängen eines 3phasigen Wechselrichters (9) verbunden, der gleichspannungsseitig an die Elektroden (7, 12) des Lichtbogenofens (8) und wechselspannungsseitig über einen 3phasigen Stabilisierungstransformator (24) an das Wechselstromnetz (N) angeschlossen ist.

Anstelle des Stabilisierungstransformators (24) kann ein Ofentransformator (2, 2') mit 2 sekundärseitigen Zusatzwicklungen (2Z) und (2'Z) verwendet werden, welche untereinander in Reihe geschaltet sind, wie es gestrichelt angedeutet ist. Dadurch können Platz und Kosten gespart werden.

Mittels des Wechselrichters (9) kann Blindleistung an das Wechselstromnetz (N) abgegeben oder von dort bezogen werden. Es ist dafür keine zusätzliche Reaktanz erforderlich, da die vorhandenen Drosselspulen (6, 6') als Reaktanz für die Blindleistungskompensation mit benutzt werden.

Eine sehr wirksame Blindleistungskompensation mit einer Reduzierung einer Flackerampitude um etwa 20 %, die mittels einer Computersimulation ermittelt wurde, wird bereits mit K1 = K2 = 0 erreicht, wobei der Transformator (13) und der Wechselspannungswandler (14) entbehrlich sind.

Andererseits erreicht man auch eine befriedigende Blindleistungskompensation, wenn zusätzlich der Wechselrichter (9), der Zündimpulswandler (23) und der Stabilisierungstransformator (24) bzw. die Zusatzwicklungen (2Z) und (2'Z) am Ofentransformator (2, 2') fehlen.

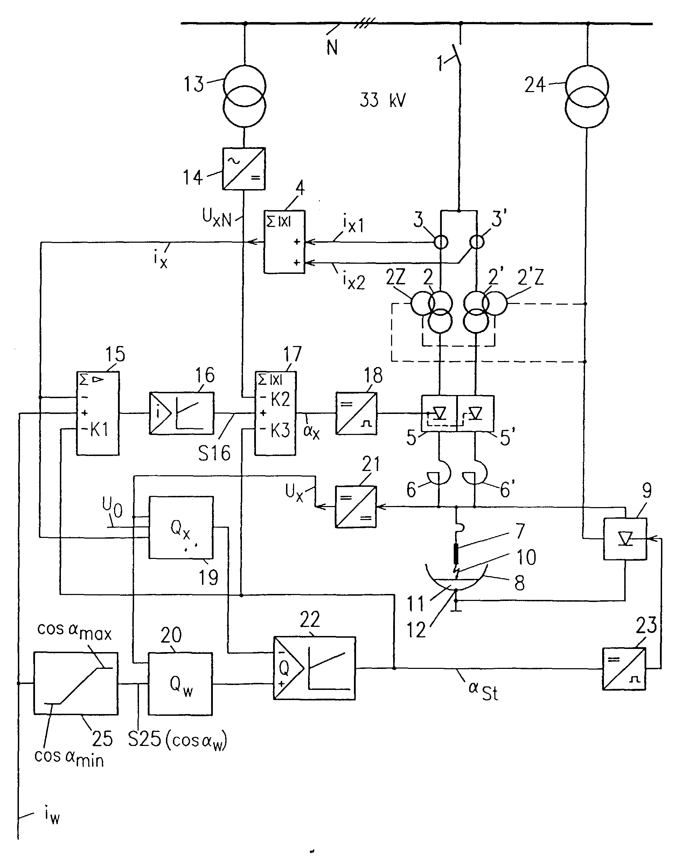

Den größten Erfolg mit einer Reduzierung einer Flackerampitude um etwa 40 % erreicht man, wenn alle Maßnahmen gemäß der Prinzipschaltung von Fig. 1 angewendet werden.

Es versteht sich, daß der Summierer (4) fehlen kann und die Teilstromistwertsignale ($i_{x1}$, $i_{x2}$) dem Sum-

mierer (15) und dem Funktionsgeber (19) separat zugeführt sein können, wobei dann die Summenbildung dort erfolgt.

BEZEICHNUNGSLISTE

| | |
|---|---|
| 1 | Schalter |
| 2, 2' | Ofentransformatoren mit mehreren Schaltstufen |
| 2Z, 2'Z | sekundärseitige Zusatzwicklungen von 2 bzw. 2' |
| 3, 3' | Stromwandler |
| 4, 15, 17 | Summierer, Summierglied |
| 5, 5 | Gleichrichter |
| 6, 6' | Drosselspulen, Reaktoren |
| 7 | Kathode, Elektrode |
| 8 | Lichtbogenofen, Anlage |
| 9 | Wechselrichter |
| 10 | Lichtbogen |
| 11 | Schmelze, Schmelzbad |
| 12 | Anode, 2. Elektrode |
| 13 | Transformator |
| 14 | Wechselspannungswandler |
| 16 | Stromregler |
| 18, 23 | Zündimpulswandler |
| 19 | Funktionsgeber für $Q_x$ |
| 20 | Funktionsgeber für $Q_w$ |
| 21 | Gleichspannungswandler |
| 22 | Blindleistungsregler |
| 24 | Stabilisierungstransformator |
| 25 | Funktionsgeber für cos ($\alpha_w$) |
| $i_{max}$ | zulässiger Maximalstrom |
| $i_x$ | Stromistwertsignal, Stromistwert |
| $i_{x1}$, $i_{x2}$ | Teilstromistwertsignale |
| $i_w$ | Stromsollwertsignal |
| K1 - K3 | Konstanten |
| N | Wechselstromnetz |
| $Q_x$ | Blindleistungsistwertsignal |
| $Q_w$ | Blindleistungssollwertsignal |
| S16 | Ausgangssignal von 16 |
| S25 | Ausgangssignal von 25, cos ($\alpha_w$) |
| $U_{xN}$ | Netzspannung von N |
| $U_x$ | Gleichspannung an 7, Lichtbogenspannung |
| $U_0$ | Gleichspannungskonstante, entsprechend Nullast |
| $\alpha_{max}$ | maximal zulässiger Zündwinkel |
| Amin | minimal zulässiger Zündwinkel |
| $\alpha_x$ | Gleichrichter-Stellgrößensignal, Zündwinkelistwert |
| $\alpha_{St}$ | Zündwinkel für 23, Stabilisierungszündwinkelsignal |
| $\alpha_w$ | Zündwinkelsollwert |

**Patentansprüche**

1. Verfahren zur Stabilisierung eines Wechselstromnetzes (N) gegen Blindlastschwankungen mindestens einer elektrischen Last (8) mit variabler Blindlast,

a) wobei eine Stromstärke ($i_x$) durch diese Last (8) mittels eines Stromreglers (16) in einem 1. Regelkreis, der diese Last (8) als Regelstrecke enthält, durch mindestens einen 1. Stromrichter (5, 5') auf einen vorgebbaren Stromsollwert ($i_w$) geregelt wird,

b) wobei eine Stromrichter-Stellgröße ($\alpha_x$) für diesen 1. Stromrichter (5, 5') in Abhängigkeit von einer vom Stromregler (16) gelieferten Stromreglerstellgröße (S16) gebildet wird,

c) wobei eine Blindleistung ($Q_x$) dieser Last (8) in Abhängigkeit von einem Stabilisierungszündwinkel ($\alpha_{St}$) vom Ausgang eines Blindleistungsreglers (22) auf einen vorgebbaren Blindleistungssollwert ($Q_w$) geregelt wird,

dadurch gekennzeichnet,

d) daß die Stromrichter-Stellgröße ($\alpha_x$) in Abhängigkeit von einem mit mindestens einem vorgebbaren Faktor (K1, K3) multiplizierten Stabilisierungszündwinkel ($\alpha_{St}$) gebildet wird.

2. Verfahren nach Anspruch 1, dadurch gekennzeichnet,

a) daß der Stabilisierungszündwinkel ($\alpha_{St}$) mit einem vorgebbaren 1. Faktor K1 multipliziert und danach additiv mit mindestens einer Eingangsgröße des Stromreglers (16) verknüpft wird,

b) insbesondere, daß der vorgebbare 1. Faktor K1 im Bereich $0 \leq K1 \leq 0,4$ liegt.

3. Verfahren nach Anspruch 1 oder 2, dadurch gekennzeichnet,

a) daß der Stabilisierungszündwinkel ($\alpha_{St}$) mit einem vorgebbaren 3. Faktor K3 multipliziert und danach additiv mit mindestens einer Ausgangsgröße des Stromreglers (16) verknüpft wird,

b) insbesondere, daß der vorgebbare 3. Faktor K3 im Bereich $0 \leq K3 \leq 0,4$ liegt.

4. Verfahren nach einem der vorhergehenden Ansprüche, dadurch gekennzeichnet,

a) daß diese Stromrichter-Stellgröße ($\alpha_x$) ferner in Abhängigkeit von einer mit einem vorgebbaren 2. Faktor K2 multiplizierten Netzspannung ($U_{xN}$) des Wechselstromnetzes (N) durch additives Verknüpfen mit der Stromreglerstellgröße (S16) gebildet wird,

b) insbesondere, daß der vorgebbare 2. Faktor K2 im Bereich $0 \leq K2 \leq 0,5$ liegt.

5. Verfahren zur Stabilisierung eines Wechselstromnetzes (N) gegen Blindlastschwankungen mindestens einer elektrischen Last (8) mit variabler Blindlast,

> a) wobei eine Stromstärke ($i_x$) durch diese Last (8) mittels eines Stromreglers (16) in einem 1. Regelkreis, der diese Last (8) als Regelstrecke enthält, durch mindestens einen 1. Stromrichter (5, 5') auf einen vorgebbaren Stromsollwert ($i_w$) geregelt wird,
> b) wobei eine Stromrichter-Stellgröße ($\alpha_x$) für diesen 1. Stromrichter (5, 5') in Abhängigkeit von einer vom Stromregler (16) gelieferten Stromreglerstellgröße (S16) gebildet wird,
> c) wobei eine Blindleistung ($Q_x$) dieser Last (8) in Abhängigkeit von einem Stabilisierungszündwinkel ($\alpha_{St}$) vom Ausgang eines Blindleistungsreglers (22) auf einen vorgebbaren Blindleistungssollwert ($Q_w$) geregelt wird,

> dadurch gekennzeichnet,
> d) daß die Blindleistung ($Q_x$) in Abhängigkeit von dem Stabilisierungszündwinkel ($\alpha_{St}$) in einem 2. Regelkreis, der diese Last (8) als Regelstrecke enthält, durch mindestens einen 2. Stromrichter (9) auf den vorgebbaren Blindleistungssollwert ($Q_w$) geregelt wird.

6. Blindleistungskompensationseinrichtung

> a) mit mindestens einer elektrischen Last (8) mit variabler Blindlast,
> b) die über mindestens einen 1. Stromrichter (5, 5') mit einem die Last (8) speisenden Wechselstromnetz (N) in Wirkverbindung steht,
> c) mit einem Stromregler (16), der ausgangsseitig mit dem mindestens einen 1. Stromrichter (5, 5') in Steuerverbindung steht, und
> d) mit einem Blindleistungsregler (22), der ausgangsseitig mit einer Blindleistungskompensationseinrichtung (5, 5'; 9) in Steuerverbindung steht,

> dadurch gekennzeichnet,

> e) daß der Stromregler (16) über einen 1. Summierer (17) mit dem mindestens einen 1. Stromrichter (5, 5') in Steuerverbindung steht und
> f) daß der Blindleistungsregler (22) ausgangsseitig mit einem Eingang dieses 1. Summierers (17) in Wirkverbindung steht.

7. Blindleistungskompensationseinrichtung nach Anspruch 6, dadurch gekennzeichnet, daß der 1. Summierer (17) eingangsseitig über einen Wechselspannungswandler (14) mit dem Wechselstromnetz (N) in Wirkverbindung steht.

8. Blindleistungskompensationseinrichtung nach Anspruch 6 oder 7, dadurch gekennzeichnet, daß der Blindleistungsregler (22) ausgangsseitig über einen 2. Summierer (15) mit dem Eingang des Stromreglers (16) in Wirkverbindung steht.

9. Blindleistungskompensationseinrichtung

> a) mit mindestens einer elektrischen Last (8) mit variabler Blindlast,
> b) die über mindestens einen 1. Stromrichter (5, 5') mit einem die Last (8) speisenden Wechselstromnetz (N) in Wirkverbindung steht,
> c) mit einem Stromregler (16), der ausgangsseitig mit dem mindestens einen 1. Stromrichter (5, 5') in Steuerverbindung steht, und
> d) mit einem Blindleistungsregler (22), der ausgangsseitig mit einer Blindleistungskompensationseinrichtung (5, 5'; 9) in Steuerverbindung steht,

> dadurch gekennzeichnet,

> f) daß ein 2. Stromrichter (9) vorgesehen ist,
> g) der gleichstromseitig zu der Last (8) parallelgeschaltet ist,
> h) der wechselstromseitig mit dem Wechselstromnetz (N) in Wirkverbindung steht und
> i) der steuerseitig mit dem Ausgang des Blindleistungsreglers (22) in Wirkverbindung steht.

10. Blindleistungskompensationseinrichtung nach Anspruch 9, dadurch gekennzeichnet,

> a) daß der mindestens eine 1. Stromrichter (5, 5') über mindestens einen Transformator (2, 2') mit dem Wechselstromnetzes (N) in Wirkverbindung steht und
> b) daß der mindestens eine Transformator (2, 2') sekundärseitig mindestens eine Zusatzwicklung (2Z, 2'Z) aufweist,
> c) die mit Wechselstromeingängen des 2. Stromrichters (9) in elektrischer Verbindung stehen.

**Claims**

1. Method for stabilizing an AC power supply network (N) against reactive load fluctuations of at least one electric load (8) having a variable reactive load,

> a) a current intensity ($i_x$) due to this load (8) being controlled by means of a current controller (16) in a 1st control loop, which contains this load (8) as controlled system, to a prescribable desired current value ($i_w$) by at least one 1st power converter (5, 5'),

b) a power converter manipulated variable ($\alpha_x$) being formed for this 1st power converter (5, 5') as a function of a current controller manipulated variable (S16) supplied by the current controller (16),

c) a reactive power ($Q_x$) of this load (8) being controlled to a prescribable reactive power desired value ($Q_w$) as a function of a stabilization striking angle ($\alpha_{St}$) from the output of a reactive power controller (22),

characterized

d) in that the power converter manipulated variable ($\alpha_x$) is formed as a function of a stabilization striking angle ($\alpha_{St}$) multiplied by at least one prescribable factor (K1, K3).

2. Method according to Claim 1, characterized

a) in that the stabilization striking angle ($\alpha_{St}$) is multiplied by a prescribable 1st factor K1 and thereafter combined additively with at least one input variable of the current controller (16),

b) in particular, in that the prescribable 1st factor K1 is in the range of $0 \leq K1 \leq 0.4$.

3. Method according to Claim 1 or 2, characterized

a) in that the stabilization striking angle ($\alpha_{St}$) is multiplied by a prescribable 3rd factor K3 and thereafter additively combined with at least one output variable of the current controller (16),

b) in particular, in that the prescribable 3rd factor K3 is in the range of $0 \leq K3 \leq 0.4$.

4. Method according to one of the preceding claims, characterized

a) in that this power converter manipulated variable ($\alpha_x$) is further formed by additive combination with the current controller manipulated variable (S16) as a function of a power supply voltage ($U_{xN}$), multiplied by a prescribable 2nd factor K2, of the AC power supply network (N),

b) in particular, in that the prescribable 2nd factor K2 is in the range of $0 \leq K2 \leq 0.5$.

5. Method for stabilizing an AC power supply network (N) against reactive load fluctuations of at least one electric load (8) having a variable reactive load,

a) a current intensity ($i_x$) due to this load (8) being controlled by means of a current controller (16) in a 1st control loop, which contains this load (8) as controlled system, to a prescribable desired current value ($i_w$) by at least one 1st power converter (5, 5'),

b) a power converter manipulated variable ($\alpha_x$) being formed for this 1st power converter (5, 5') as a function of a current controller manipulated variable (S16) supplied by the current controller (16),

c) a reactive power ($Q_x$) of this load (8) being controlled to a prescribable reactive power desired value ($Q_w$) as a function of a stabilization striking angle ($\alpha_{St}$) from the output of a reactive power controller (22),

characterized

d) in that the reactive power ($Q_x$) is controlled, as a function of the stabilization striking angle ($\alpha_{St}$) in a 2nd control loop which contains this load (8) as controlled system, to the prescribable reactive power desired value ($Q_w$) by at least one 2nd power converter (9).

6. Reactive power compensation device

a) having at least one electric load (8) having a variable reactive load,

b) which is operationally connected via at least one 1st power converter (5, 5') to an AC power supply network (N) feeding the load (8),

c) having a current controller (16) which is connected in terms of control on the output side to the at least one 1st power converter (5, 5'), and

d) having a reactive power controller (22) which is connected in terms of control on the output side to a reactive power compensation device (5, 5'; 9),

characterized

e) in that the current controller (16) is connected in terms of control to the at least one 1st power converter (5, 5') via a 1st summer (17), and

f) in that the reactive power controller (22) is operationally connected on the output side to an input of this 1st summer (17).

7. Reactive power compensation device according to Claim 6, characterized in that the 1st summer (17) is operationally connected on the input side to the AC power supply network (N) via an AC-AC converter (14).

8. Reactive power compensation device according to Claim 6 or 7, characterized in that the reactive power controller (22) is operationally connected on the output side to the input of the current controller (16) via a 2nd summer (15).

9. Reactive power compensation device

    a) having at least one electric load (8) having a variable reactive load,
    b) which is operationally connected via at least one 1st power converter (5, 5') to an AC power supply network (N) feeding the load (8),
    c) having a current controller (16) which is connected in terms of control on the output side to the at least one 1st power converter (5, 5'), and
    d) having a reactive power controller (22) which is connected in terms of control on the output side to a reactive power compensation device (5, 5'; 9),

characterized

    e) in that a 2nd power converter (9) is provided,
    f) which is connected in parallel with the load (8) on the DC side,
    g) is operationally connected on the AC side to the AC power supply network (N), and
    h) is operationally connected on the control side to the output of the reactive power controller (22).

10. Reactive power compensation device according to Claim 9, characterized

    a) in that the at least one 1st power converter (5, 5') is operationally connected to the AC power supply network (N) via at least one transformer (2, 2'), and
    b) in that the at least one transformer (2, 2') has on the secondary side at least one auxiliary winding (2Z, 2'Z),
    c) which is electrically connected to AC inputs of the 2nd power converter (9).

**Revendications**

1. Système pour stabiliser un réseau alternatif (N) contre les fluctuations d'une charge réactive d'au moins une charge électrique (8) ayant une charge réactive variable,

    a) une intensité de courant ($i_x$) au travers de ladite charge (8) étant régulée par au moins un 1$^{er}$ redresseur (5, 5') à une valeur de consigne ($i_w$) prédéfinie du courant au moyen d'un régulateur de courant (16) dans un 1$^{er}$ circuit de régulation, lequel reçoit ladite charge (8) sous la forme d'une branche de régulation,
    b) une grandeur de réglage du redresseur ($\alpha_x$) étant formée pour ce 1$^{er}$ redresseur (5, 5') en fonction d'une grandeur de régulation du courant (S16) délivrée par le régulateur de courant (16),
    c) une puissance réactive ($Q_x$) de cette charge (8) étant régulée à une valeur de consigne prédéfinie de la puissance réactive ($Q_w$) en fonction d'un angle d'amorçage de stabilisation ($\alpha_{St}$) en provenance de la sortie d'un régulateur de puissance réactive (22),

caractérisé par le fait
    d) que la grandeur de réglage du redresseur ($\alpha_x$) est obtenue à partir d'un angle d'amorçage de stabilisation ($\alpha_{St}$) multiplié par au moins un facteur prédéfini (K1, K3).

2. Système selon la revendication 1, caractérisé par le fait

    a) que l'angle d'amorçage de stabilisation ($\alpha_{St}$) est multiplié par un 1$^{er}$ facteur prédéfini K1 et qu'il est ensuite lié par addition à au moins une grandeur d'entrée du régulateur de courant (16),
    b) notamment que le 1$^{er}$ facteur K1 prédéfini se trouve dans la plage $0 \le K1 \le 0,4$.

3. Système selon la revendication 1 ou 2, caractérisé par le fait

    a) que l'angle d'amorçage de stabilisation ($\alpha_{St}$) est multiplié par un 3$^{ème}$ facteur prédéfini K3 et qu'il est ensuite lié par addition à au moins une grandeur de sortie du régulateur de courant (16),
    b) notamment que le 3$^{ème}$ facteur K3 prédéfini se trouve dans la plage $0 \le K3 \le 0,4$.

4. Système selon l'une des revendications précédentes, caractérisé par le fait

    a) que ladite grandeur de réglage du redresseur ($\alpha_x$) est en plus obtenue en fonction d'une tension de réseau ($U_{xN}$) du réseau alternatif (N) multipliée par un 2$^{ème}$ facteur prédéfini K2 par addition avec la grandeur de régulation du courant (S16),
    b) notamment que le 2$^{ème}$ facteur K2 prédéfini se trouve dans la plage $0 \le K2 \le 0,5$.

5. Système pour stabiliser un réseau alternatif (N) contre les fluctuations d'une charge réactive d'au moins une charge électrique (8) ayant une charge réactive variable,

    a) une intensité de courant ($i_x$) au travers de ladite charge (8) étant régulée par au moins un 1$^{er}$ redresseur (5, 5') à une valeur de consigne ($i_w$) prédéfinie du courant au moyen d'un régulateur de courant (16) dans un 1$^{er}$ circuit de régulation, lequel reçoit ladite charge (8) sous la forme d'une branche de régulation,

b) une grandeur de réglage du redresseur ($\alpha_x$) étant obtenue pour ce 1$^{er}$ redresseur (5, 5') en fonction d'une grandeur de régulation du courant (S16) délivrée par le régulateur de courant (16),

c) une puissance réactive ($Q_x$) de cette charge (8) étant régulée à une valeur de consigne prédéfinie de la puissance réactive ($Q_w$) en fonction d'un angle d'amorçage de stabilisation ($\alpha_{St}$) en provenance de la sortie d'un régulateur de puissance réactive (22),

caractérisé par le fait

d) que la puissance réactive ($Q_x$) est régulée à la valeur de consigne prédéfinie de la puissance réactive ($Q_w$) par au moins un 2$^{ème}$ redresseur (9) en fonction de l'angle d'amorçage de stabilisation ($\alpha_{St}$) dans un 2$^{ème}$ circuit de régulation qui reçoit ladite charge (8) sous la forme d'une branche de régulation.

6. Dispositif de compensation de puissance réactive

a) avec au moins une charge électrique (8) ayant une charge réactive variable,

b) qui se trouve en liaison active par le biais d'au moins un 1$^{er}$ redresseur (5, 5') avec un réseau alternatif (N) alimentant la charge (8),

c) avec un régulateur de courant (16) dont la sortie est en liaison commandée avec l'au moins un 1$^{er}$ redresseur (5, 5'), et

d) avec un régulateur de puissance réactive (22) dont la sortie est en liaison commandée avec un dispositif de compensation de puissance réactive (5, 5' ; 9),

caractérisé par le fait

e) que le régulateur de courant (16) est en liaison commandée avec au moins un 1$^{er}$ redresseur (5, 5') par le biais d'un 1$^{er}$ additionneur et

f) que la sortie du régulateur de puissance réactive (22) est en liaison active avec une entrée de ce 1$^{er}$ additionneur (17).

7. Dispositif de compensation de puissance réactive selon la revendication 6, caractérisé par le fait que l'entrée du 1$^{er}$ additionneur (17) est en liaison active avec le réseau alternatif (N) par le biais d'un transformateur de tension alternative (14).

8. Dispositif de compensation de puissance réactive selon la revendication 6 ou 7, caractérisé par le fait que la sortie du régulateur de puissance réactive (22) est en liaison active avec l'entrée du régulateur de courant (16) par le biais d'un 2$^{ème}$ additionneur (15).

9. Dispositif de compensation de puissance réactive

a) avec au moins une charge électrique (8) ayant une charge réactive variable,

b) qui se trouve en liaison active par le biais d'au moins un 1$^{er}$ redresseur (5, 5') avec un réseau alternatif (N) alimentant la charge (8),

c) avec un régulateur de courant (16) dont la sortie est en liaison commandée avec l'au moins un 1$^{er}$ redresseur (5, 5'), et

d) avec un régulateur de puissance réactive (22) dont la sortie est en liaison commandée avec un dispositif de compensation de puissance réactive (5, 5' ; 9),

caractérisé par le fait

f) qu'il est prévu un 2$^{ème}$ redresseur (9),

g) qui est branché en parallèle avec la charge (8) du côté courant continu,

h) qui est en liaison active avec le réseau alternatif (N) du côté courant alternatif et

i) qui se trouve en liaison active avec la sortie du régulateur de puissance réactive (22) du côté commande.

10. Dispositif de compensation de puissance réactive selon la revendication 9, caractérisé par le fait

a) que l'au moins un 1$^{er}$ redresseur (5, 5') est en liaison active avec le réseau alternatif (N) par le biais d'au moins un transformateur (2, 2') et

b) que le secondaire de l'au moins un transformateur (2, 2') présente au moins un enroulement supplémentaire (2Z, 2'Z),

c) qui est relié électriquement avec les entrées de courant alternatif du 2$^{ème}$ redresseur (9).